# EUROPEAN PATENT APPLICATION

(11) **EP 4 535 742 A1**
(43) Date of publication of application: **09.04.2025**
(21) Application number: 24200703.7
(22) Date of filing: 17.09.2024
(51) Int. Cl.: H04L 27/26, H04L 5/00

(54) **METHOD AND APPARATUS OF DOWNLINK MULTI-USER EXTENSION FOR NON-HIGH-EFFICIENCY (NON-HE) PHYSICAL LAYER PROTOCOL DATA UNIT (PPDU) IN WIRELESS LOCAL AREA NETWORK**

(30) Priority: 05.10.2023 KR 20230132698; 05.01.2024 KR 20240002458
(71) Applicant: Samsung Electronics Co., Ltd, Suwon-si, Gyeonggi-do 16677 (KR)
(72) Inventor: RISON, Mark Gorthorn, Cambridge, CB4 0AE (GB); TONG, Fei, Cambridge, CB4 0AE (GB); KOUNDOURAKIS, Michail, Cambridge, CB4 0AE (GB); FLETCHER, Paul Nicholas, Cambridge, CB4 0AE (GB)
(74) Representative: Kuhnen & Wacker Patent- und Rechtsanwaltsbüro PartG mbB

(57) **Abstract**

A first electronic device (202) includes: a first transceiver (206); a first memory (210) storing at least one instruction; and a first processor (208) operatively connected to the first transceiver (206) and the first memory (210), the first processor (208) being configured to execute the at least one instruction to: transmit, to at least one second electronic device (204), a non-high-efficiency (non-HE) announcement frame, and transmit, to the at least one second electronic device (204), a downlink (DL) multi-user (MU) extension (Ext) physical layer protocol (PPDU), wherein the DL MU Ext PPDU includes: a non-HE PPDU and a HE PPDU.

## Description

### BACKGROUND

### 1. Field

The disclosure relates to a system and a method of downlink (DL) multi-user (MU) extension for non-high-efficiency (non-HE) physical layer protocol data units (PPDUs) in a wireless communication system, for example, the Institute of Electrical and Electronics Engineers (IEEE) 802.11 wireless local area network (WLAN) system.

### 2. Description of Related Art

The topics of medium utilisation and low latency have been very actively studied on IEEE 802.11 WLAN systems. The topics include: (1) MU PPDUs. Parts of the channel bandwidth or spatial diversity can be allocated to different stations (STAs) within a transmit opportunity (TXOP) (orthogonal frequency-division multiple access (OFDMA) and multi user-multiple-input and multiple-output (MU-MIMO)), and (2) an attempt to switch often between downlink (DL) traffic and uplink (UL) traffic, with an access point (AP) taking a role of scheduling medium access (e.g., uplink multi-user (UL MU) feature) and allowing STAs to deliver UL traffic during DL TXOPs (triggered TXOP sharing) or deliver low latency traffic during special service periods (e.g., restricted target wake time (R-TWT)).

However, all these efforts in the above-described topics can be compromised, for example, when there are significant amounts of (legacy) non-HE DL traffic in a basic service set (BSS). That is, a lot of the non-HE PPDUs have high durations. For example, the non-HT PPDUs typically last several milliseconds as the non-HT PPDUs use low OFDM rates. Moreover, useful payloads of the non-HT PPDUs occupy only portions of the full bandwidth of the BBS. For example, the payloads in the non-HT PPDUs are conveyed in the primary 20 MHz channel of the BSS, so any unused channel bandwidth cannot be utilized for any other traffic. Thus, there is a need to improve efficiency and utilisation of the wireless system when there are significant amounts of the (legacy) non-HT DL traffic in the BSS.

### SUMMARY

Provided are a method and a system of including the non-high-efficiency (non-HE) physical layer protocol data units (PPDUs) in downlink (DL) multi-user (MU). Provided are a method and a system using any channel bandwidth, which is not used by the non-HE PPDUs for DL, for MU.

According to an aspect of the disclosure, A first electronic device includes: a first transceiver; a first memory storing at least one instruction; and a first processor operatively connected to the first transceiver and the first memory, the first processor being configured to execute the at least one instruction to: transmit, to at least one second electronic device, a non-high-efficiency (non-HE) announcement frame, and transmit, to the at least one second electronic device, a downlink (DL) multi-user (MU) extension (Ext) physical layer protocol (PPDU), wherein the DL MU Ext PPDU includes: a non-HE PPDU and a HE PPDU.

In some embodiments of the first electronic device, the first processor is further configured to execute the at least one instruction to transmit the DL MU Ext PPDU at a first time instance after transmitting the non-HE announcement frame at a second time instance, and wherein a time difference between the first time instance and the second time instance is a short inter frame space (SIFS).

In some embodiments of the first electronic device, the first electronic device further includes a first fast Fourier transform (FFT) engine, a first cyclic prefix (CP) adder, and a first mixer, wherein the first processor is further configured to execute the at least one instruction to convert symbols for carrying data for a HE station into the HE PPDU by utilizing the first FFT engine, the first CP adder, and the first mixer.

In some embodiments of the first electronic device, the first electronic device further includes a second FFT engine, a second CP adder, and a second mixer, wherein the first processor is further configured to execute the at least one instruction to convert symbols for carrying data for a non-HE station into the non-HE PPDU by utilizing the second FFT engine, the second CP adder, and the second mixer.

In some embodiments of the first electronic device, the first electronic device further includes a combiner configured to combine the HE PPDU with the non-HE PPDU, wherein the first processor is further configured to execute the at least one instruction to generate the DL MU Ext PPDU by using the combiner.

In some embodiments of the first electronic device, the first electronic device is an access point in a wireless communication system.

In some embodiments of the first electronic device, the wireless communication system is an IEEE 802.11 system.

In some embodiments of the first electronic device, the DL MU Ext PPDU includes a primary channel containing the non-HE PPDU and a secondary channel containing the HE PPDU.

In some embodiments of the first electronic device, the first processor is further configured to execute the at least one instruction to: transmit, to the at least one second electronic device, a non-extremely high throughput (non-EHT) announcement frame, and transmit, to the at least one second electronic device, another DL MU Ext physical layer protocol (PPDU), wherein the another DL MU Ext PPDU includes: a non-EHT PPDU and an EHT PPDU.

In some embodiments of the first electronic device, the first processor is configured to execute the at least one instruction to: transmit, to the at least one second electronic device, a non-ultra-high reliability (non-UHR) announcement frame, and transmit, to the at least one second electronic device, another DL MU Ext physical layer protocol (PPDU), wherein the another DL MU Ext PPDU includes: a non-UHR PPDU and a UHR PPDU.

According to an aspect of the disclosure, a second electronic device includes: a second transceiver; a second memory storing at least one instruction; and a second processor operatively connected to the second transceiver and the second memory, the second processor being configured to execute the at least one instruction to: receive, from a first electronic device, a non-high-efficiency (non-HE) announcement frame, and receive, from the first electronic device, a downlink (DL) multi-user (MU) extension (Ext) physical layer protocol (PPDU), wherein the DL MU Ext PPDU includes: a non-HE PPDU and a HE PPDU.

In some embodiments of the second electronic device, the second electronic device is a station in a wireless communication system.

In some embodiments of the second electronic device, the wireless communication system is an IEEE 802.11 system.

In some embodiments of the second electronic device, the DL MU Ext PPDU includes a primary channel containing the non-HE PPDU and a secondary channel containing the HE PPDU.

According to an aspect of the disclosure, a method performed by a first electronic device, includes: transmitting, to at least one second electronic device, a non-high-efficiency (non-HE) announcement frame; and transmitting, to the at least one second electronic device, a downlink (DL) multi-user (MU) extension (Ext) physical layer protocol (PPDU), wherein the DL MU Ext PPDU includes: a non-HE PPDU and a HE PPDU.

In some embodiments, the DL MU Ext PPDU is transmitted at a first time instance after the non-HE announcement frame is transmitted at a second time instance, and wherein a time difference between the first time instance and the second time instance is a short inter frame space (SIFS).

In some embodiments, the first electronic device is an access point in a wireless communication system and the second electronic device is a station in a wireless communication system.

In some embodiments, the wireless communication system is an IEEE 802.11 system.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 illustrates an overall structure of the Institute of Electrical and Electronics Engineers (IEEE) 802.11 wireless LAN (WLAN) as an example of a wireless communication system;
FIG. 2 illustrates a wireless communication system in accordance with embodiments of the disclosure;
FIG. 3 illustrates a non-high-efficiency (non-HE) announcement frame and a downlink (DL) multi-user (MU) extension (EXT) physical layer protocol data unit (PPDU) in accordance with embodiments of the disclosure;
FIG. 4 illustrates a waveform of a HE portion of the DL MU EXT PPDU and a waveform of a non-HE portion of the DL MU EXT PPDU in accordance with embodiments of the disclosure;
FIG. 5 illustrates an implementation in accordance with embodiments of the disclosure;
FIG. 6 illustrates another implementation in accordance with embodiments of the disclosure;
FIG. 7 illustrates operations performed by a first electronic device in accordance with embodiments of the disclosure; and
FIG. 8 illustrates operations performed by a second electronic device in accordance with embodiments of the disclosure.

### DETAILED DESCRIPTION

The terms as used in the disclosure are provided to merely describe specific embodiments, not intended to limit the scope of other embodiments. Singular forms include plural referents unless the context clearly dictates otherwise. The terms and words as used herein, including technical or scientific terms, may have the same meanings as generally understood by those skilled in the art. The terms as generally defined in dictionaries may be interpreted as having the same or similar meanings as or to contextual meanings of the relevant art. Unless otherwise defined, the terms should not be interpreted as ideally or excessively formal meanings. Even though a term is defined in the disclosure, the term should not be interpreted as excluding embodiments of the disclosure under other circumstances.

According to one or more embodiments, the electronic device may be one of various types of electronic devices. The electronic devices may include, for example, a network device, a router, an access point device, a terminal station in a wireless system, a portable communication device (e.g., a smartphone), a computer device, a portable multimedia device, a portable medical device, a camera, a wearable device, or a home appliance. According to an embodiment of the disclosure, the electronic devices are not limited to those described above.

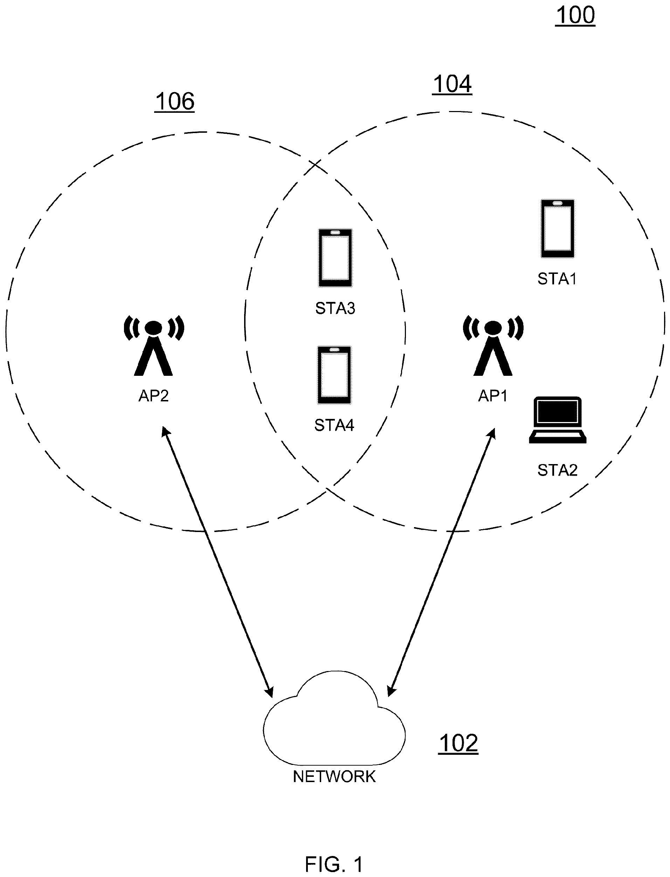

FIG. 1 illustrates an overall structure of the Institute of Electrical and Electronics Engineers (IEEE) 802.11 wireless LAN (WLAN) as an example of a wireless communication system.

In describing embodiments of the disclosure in detail, the focus will mainly be on IEEE 802.11 WLAN, but the disclosure is also applicable to other communication systems (e.g., a cellular communication system such as long term evolution (LTE), LTE-advanced (LTE-A), new radio (NR), wireless broadband (WiBro), a global system for mobile communication (GSM), or a short-range communication system such as Bluetooth and near field communication (NFC)) with a similar technical background and channel form with slight modifications without departing from the scope of the disclosure, as may be determined by one of ordinary skill in the art.

In FIG. 1, the wireless communication system 100 may include a first access point AP1, a second access point AP2, a first station STA1, a second station STA2, a third station STA3, and a fourth station STA4. The first access point AP1 and the second access point AP2 may access a network 102 that may include the Internet, an Internet protocol (IP) network, a distribution network (DN), or any other network.

The first access point AP1 may provide the first station STA1, the second station STA2, the third station STA3, and the fourth station STA4 with access to the network 102 within a first basic service set (BSS) 104. The BSS is a basic building block of the IEEE 802.11 WLAN system.

In one embodiment, the first access point AP1 may communicate with at least one of the first station STA1, the second station STA2, the third station STA3, or the fourth station STA4 based on IEEE 802.11 wireless fidelity (WiFi) or any other WLAN access technology.

In one embodiment, the access point (e.g., AP1) may be referred to as a router, a gateway, and the like. In one embodiment, the station (e.g., STA1, STA2, STA3, and STA4) may be referred to as a mobile station, a subscriber station, a terminal, a mobile terminal, a wireless terminal, user equipment, a user, and the like. The station may be a mobile device, such as a mobile phone, a laptop computer, a wearable device, or the like, or a stationary device, such as a desktop computer, a smart TV, or the like.

The access point may allocate at least one resource unit (RU) to at least one station. The access point may transmit data through at least one allocated resource unit, and at least one station may receive data through at least one allocated resource unit. In 802.11ax (hereafter HE), an access point may allocate only a single resource unit to at least one station, while in 802.11be or next-generation IEEE 802.11 standards, an access point may allocate a multi-resource unit (MRU) including two or more resource units to at least one station. For example, the first access point AP1 may allocate resource units to at least one of the first station STA1, the second station STA2, the third station STA3, or the fourth station STA4, and may transmit data through the allocated resource units.

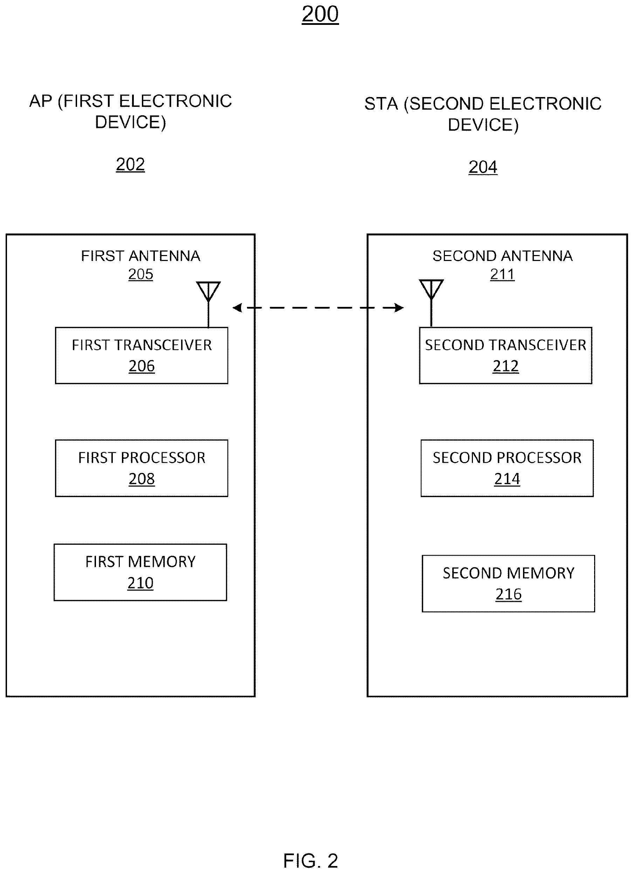

FIG. 2 illustrates a wireless communication system 200 in accordance with embodiments of the disclosure. FIG. 2 illustrates an access point 202 (a first electronic device) and a station 204 (a second electronic device) that communicate with each other in the wireless communication system 200. Each of the access point 202 (first electronic device) and the station 204 (second electronic device) of FIG. 2 may be any apparatus communicating in the wireless communication system 200 and may be referred to as an apparatus for wireless communication. In some embodiments, each of the access point 202 (the first electronic device) and the station 204 (the second electronic device) may be an access point (e.g., AP1 of FIG. 1)in a WLAN system.

In FIG. 2, the access point 202 may include a first antenna 205, a first transceiver 206, a first processor 208, and a first memory 210. Similarly, the station 204 may include a second antenna 211, a second transceiver 212, a second processor 214, and a second memory 216.

In one embodiment, the first antenna 205, the first transceiver 206, the first processor 208, and the first memory 210 may be included in one package or may be included in different packages, respectively. In one embodiment, the second antenna 211, the second transceiver 212, the second processor 214, and the second memory 216 may be included in one package or may be included in different packages, respectively.

In one embodiment, the first antenna 205 of the access point 202 may receive a signal from the second antenna 211 and provide the received signal to the first transceiver 206, and may transmit the signal provided from the first transceiver 206 to the second antenna 211. Similarly, the second antenna 211 may receive a signal from the first antenna 205 and provide the received signal to the second transceiver 212, and may transmit the signal provided from the second transceiver 212 to the first antenna 205.

In one embodiment, the first transceiver 206 of the access point 202 may process a signal received from the station 204 through the first antenna 205, and may provide the processed signal to the first processor 208. In one embodiment, the first transceiver 206 may process the signal provided from the first processor 208 and output the processed signal through the first antenna 205. The second transceiver 212 similarly performs the above functions performed by the first transceiver 206.

In one embodiment, the first transceiver 206 and the second transceiver 212 may include one or more circuits such as a low noise amplifier, a cyclic prefix (CP) adder, a mixer, a filter, a power amplifier, an oscillator, and the like.

In one embodiment, the first processor 208 of the access point 202 may extract information transmitted by the station 204 by processing the signal received from the first transceiver 206. For example, the first processor 208 may extract information by demodulating and/or decoding a signal received from the first transceiver 206.

In one embodiment, the first processor 208 may generate a signal including information to be transmitted to the station 204 and provide the signal to the first transceiver 206. In one embodiment, the first processor 208 may provide a signal generated by encoding and/or modulating data to be transmitted to the station 204 to the first transceiver 206. The second processor 214 similarly performs the above functions performed by the first processor 208.

In one embodiment, the first processor 208 and the second processor 214 may include a programmable component such as a central processing unit (CPU), a digital signal processor (DSP), and the like, may include reconfigurable components, such as field programmable gate arrays (FPGAs), and may include a component that provides a fixed function, such as an intellectual property (IP) core.

In one embodiment, the first processor 208 may include or access the first memory 210 that stores data and/or a series of instructions. In one embodiment, the second processor 214 may include or access the second memory 216 that stores data and/or a series of instructions.

The disclosure is directed to a method and a system of including the non-high-efficiency (non-HE) physical layer protocol data units (PPDUs) in downlink (DL) multi-user (MU), which are sometimes called `DL MU extension PPDUs' in the disclosure. The disclosure is directed to a method and a system using any channel bandwidth, which are not used by the non-HE PPDUs for DL, for MU. This disclosure could be applied to the spatial domain for sub-channels other than the P20 channel.

The disclosure retains backwards compatibility for legacy STAs; the non-HE PPDUs may be received by multiple implementations of IEEE 802.11 even if those implementations cannot decode new portions of waveform disclosed (and being transmitted by the AP) in this disclosure.

The disclosure describes a new PPDU format for DL MU PPDUs that encapsulates non-HE PPDUs. The new PPDU format allows the full basic service set (BSS) channel bandwidth to be used when the AP transmits non-HE PPDUs. The new PPDU format is announced by a new non-HE announcement frame, which allows the targeted HE or later STAs to receive their PPDUs.

In the related art, DL orthogonal frequency-division multiple access (OFDMA) PPDUs can utilize the full BSS channel bandwidth, but the DL OFDMA PPDUs cannot be used with non-HE STAs.

New DL MU EXT PPDUs of the disclosure can encapsulate non-HE PPDUs, which can also be received by legacy STAs. The largest portion of the channel bandwidth, which was previously not utilized in the related art, can be utilized for DL MU to STAs that are not interested in receiving the non-HE PPDUs.

Embodiments of the disclosure allow currently unused channel bandwidths to be utilized for user traffic, which may increase the medium usage efficiency and may reduce the latency for DL traffic. The embodiments of the disclosure may be particularly useful for STAs in an active mode which does not find the beacon reception interesting so can participate in DL MU during the beacon duration every target beacon transmission time (TBTT) (typically, 102.4 ms).

The non-HE PPDUs can occupy a non-negligible portion of the BSS. The non-HE PPDUs are typically used for the following examples.

First, the non-HE PPDUs may be used to carry a beacon. The AP transmits a beacon frame, approximately, at every TBTT. Unless a critical update is signaled, the beacon is mostly uninteresting to STAs in active mode. These STAs could reuse the remaining bandwidth while the beacon occupies the primary 20 MHz (P20) channel.

Second, the non-HE PPDUs may be used as (for example, Multi-Link Device (MLD)) probe responses. The probe responses may be transmitted using non-HT rates. The probe responses may be longer frames than the beacon, as the probe responses carry addition elements (e.g., multi-link operation (MLO)), which are not included in the beacon. Active scan is used extensively by STAs. The probe responses can be unicast or broadcast. Associated (to the AP transmitting the frame) STAs are not typically interested in broadcasted responses such as a unicast probe response and the unicast probe response may be filtered out, for example, as a receiver address (RA) does not match with the receiver's medium access control (MAC) address.

Third, the non-HE PPDUs may be used as unicast transmissions to a non-HT legacy STA. DL transmissions may not use most of the BSS bandwidth, which severely limits the effectiveness of the channel usage. Typically, other STAs are not interested. The other STAs cannot even decrypt the DL frames if an encryption is used on the DL frames.

Fourth, the non-HE PPDUs may be used as unicast transmissions to a high throughput (HT) STA or very high throughput (VHT) STA which does not support the full BSS channel bandwidth.

The disclosure is directed to use a larger part of the BSS channel, excluding the primary (20 MHz for non-HT, 40/80/160/... for non-HE) channel, for transmissions between STAs which are not interested in the non-HE PPDUs, by getting the AP to initiate the DL TXOP using a non-HE, similar to a null data packet (NDP), announcement frame used to signal and protect the subsequent frame exchanges in the TXOP. The AP would initiate the DL TXOP using the non-HE announcement frame in accordance with the following operations:

First, the AP wants to transmit a non-HE PPDU in the primary channel.

Second, the AP is able to identify STAs which are not interested in receiving the non-HE PPDU in the primary channel.

Third, the P20 non-HE PPDU does not contain a beacon frame which contains a critical update.

Fourth, the AP has DL PPDUs for STAs in active mode, ready to be transmitted (a backoff counter is zero) or wants to use the remaining BSS bandwidth.

The above operations can be extended to allocate more than 20 MHz for the non-HE PPDU, e.g., for 40 MHz or 80 MHz VHT PPDU.

An example of DL MU extension (Ext) PPDU (with a non-HE announcement frame) is described here.

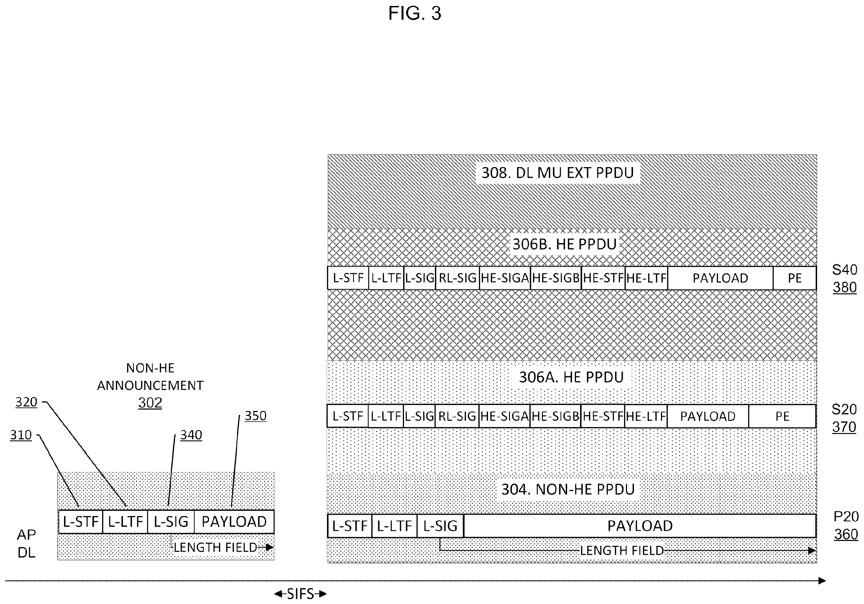

FIG. 3 shows high efficiency (HE) PPDUs encapsulated in a DL MU Ext PPDU. The HE PPDUs may also be extremely high throughput (EHT) (in IEEE 802.11be) PPDUs or ultra-high reliability (UHR) (in IEEE 802.11bn) PPDUs. In the disclosure, the HE PPDUs are a non-limiting examples, and thus, the descriptions of the HE PPDUs apply to the EHT PPDUs or the UHR PPDUs.

In the example shown in FIG. 3, the physical service data units (PSDUs) sent by the AP last until the end of the DL MU Ext PPDU but this is not required. For example, the AP may send a trigger frame to the HE STAs that may exchange PPDUs before the end of the DL MU Ext PPDU. In the example shown in FIG. 3, only the P20 channels may be used for the non-HE PPDUs.

FIG. 3 illustrates a non-HE announcement frame 302, a non-HE PPDU 304, HE PPDUs 306A, 306B, and a DL MU Ext PPDU 308, which are transmitted in the AP's downlink (DL) channels.

In FIG. 3, the non-HE announcement frame 302 includes a legacy short training field (L-STF) 310, a legacy long training field (L-LTF) 320, a legacy signal field (L-SIG) 340, and a payload 350. The payload 350 of the non-HE announcement frame 302 includes a flag to signal groupcast frames when a DTIM beacon is going to be transmitted in the DL MU Ext PPDU. The DTIM beacon information needs to be duplicated, as the STAs (addressed to receive their respective PPDUs in non-P20 channels) will not receive the DTIM beacon information. Also, the non-HE announcement 302 frame (for example, a MAC header or a payload) includes `Signal STA IDs' which shall ignore the RU reserved for the non-HE portion and, instead, receive on an RU or MRU in at least one secondary channel.

The non-HE announcement frame 302 may also signal the RUs/MRUs that each STA (which does not listen to the non-HE portion) will use in the DL MU Ext PPDU 308. Or, the RUs/MRUs may be signaled in the physical layer (PHY) header of the DL MU Ext PPDU 302 on secondary 20 MHz channels. The targeted STAs would have to know to look at the secondary 20 MHz channels.

In FIG. 3, the short inter frame space (SIFS) before the DL MU Ext PPDU 308 allows: first, legacy STAs to synchronize to the non-HE PPDU 304 transmitted on the primary channel, and second, STAs which are signaled in the PPDU to configure the STAs' receivers to expect the physical layer convergence protocol service data unit (PSDU) on the signal channels (bandwidths).

The absence of an HE (or EHT or UHR or other) PHY header in the P20 channel of the following DL MU Ext PPDU 308 needs to be announced. From a PHY perspective, the absence of the HE PHY header could be treated as temporarily changing the P20 channel for the reception of one of the PSDUs carried in the DL MU Ext PPDU 308.

The DL MU Ext PPDU may include a P20 channel 360 containing the non-HE PPDU 304. The DL MU Ext PPDU may also include at least one secondary channel (e.g., a S20 channel 370, a S40 channel 380) containing a PPDU such as a HE MU PPDU, an EHT MU PPDU, or an UHR MU PPDU, which may be used for a DL MU Ext PPDU for OFDMA. This scheme can be extended to allocate more than 20 MHz for the non-HE PPDU 304 and more than 20/40MHz for the HE/EHT/UHR PPDU.

The AP is unable to receive any UL frames while the DL MU Ext PPDU 308 is transmitted. Thus, a suitable acknowledgment policy needs to be used in the PSDUs contained in the DL MU Ext PPDU 308 that the AP transmits.

Suitable acknowledgment (ACK) policies to use may include the following options. First, no ACK. Second, block ACK. The AP can subsequently initiate an UL OFDMA TXOP soliciting BlockAck frames from the recipient STAs. Third, implicit BAR. The PPDU has to be padded (or use packet extension) to the end of the DL MU Ext PPDU 308. Obviously only one PSDU (including the STA on the P20 channel, if unicast transmission is performed on the P20 channel) can request an immediate acknowledgement. Alternatively, the AP could include Trigger frames in the PSDUs to allow each STA to send an acknowledgement (this would probably be in the same RU, for simplicity). Alternatively, the Non-HE-Primary Announcement frame could optionally be a Non-HE-Primary Announcement And Trigger frame, i.e. in addition to announcing the DL MU Ext PPDU, it would specify that TB PPDUs are to be sent (typically by the STAs addressed in the non-primary channels) immediately after the DL MU Ext PPDU (again probably in the same RU, for simplicity). The Duration/ID field would have to protect to the end of these TB PPDUs, so that legacy STAs do not attempt to transmit in the primary channel.

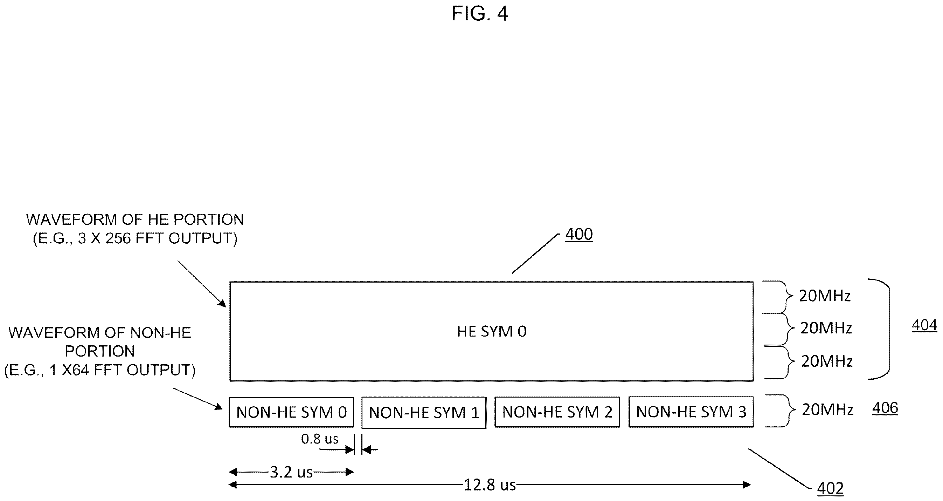

The time domain waveform will be a composite of two types of signals, which is depicted in FIG. 4 where 0.8/3.2 µs are guard intervals. A HE waveform, an EHT waveform, or an UHR waveform occupies the non-primary 20 MHz sub-channels while non-HE waveforms occupy the primary 20 MHz sub-channel. In FIG. 4, the HE waveform 400 occupies the non-primary 20 MHz three (3) sub-channels 404, while the non-HE waveforms 402 occupy the primary 20 MHz one (1) sub-channel 406.

In an embodiment, to generate those waveforms described above, there may be two independent fast Fourier transform (FFT) engines of different size; and the two outputs may be frequency shifted and combined.

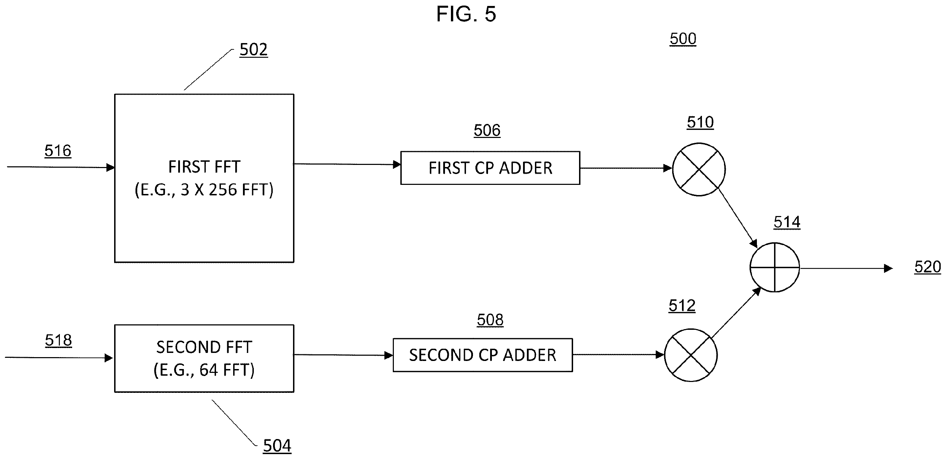

FIG. 5 illustrate that a system 500 has a first FFT engine 502 (for example, 3 X 256 FFT) followed by a first cyclic prefix (CP) adder 506 (which adds CP according to HE subcarrier spacing) and a second FFT engine 504 (for example, 1 X 64 FFT) followed by a second CP adder 508. In FIG. 5, a first input 516 (to the first FFT engine 502) corresponds to symbols carrying data for a HE user (HE STA) and a second input 518 (to the second FFT engine 504) corresponds to symbols carrying data for a non-HE user (non-HE STA).

An output of the first FFT engine 502 is transmitted to the first CP adder 506 and an output of the second FFT engine 508 is transmitted to the second CP adder 508. The first CP adder 506 and the second CP adder 508 are configured to add CPs to the outputs of the first FFT engine 502 and the second FFT engine 504, respectively. The CP addition is a technique used in conjunction with the FFT to combat intersymbol interference (ISI) in digital communication systems.

Outputs of the first CP adder 506 and the second CP adder 508 are transmitted to a first mixer 510 and a second mixer 512, respectively. The mixers 510, 512 are configured to shift frequencies of the outputs of the first CP adder 506 and the second CP adder 508, respectively. Outputs of the first mixer 510 and the second 512 are combined by a combiner 514. An output 520 of the system 400 is a combined signal of the above-described two paths.

The above-described functional blocks (circuits) 502, 504, 506, 508, 510, 512, and 514 may be implemented by software codes or hardware components included in the system 500, which may correspond to the AP shown in FIG. 1.

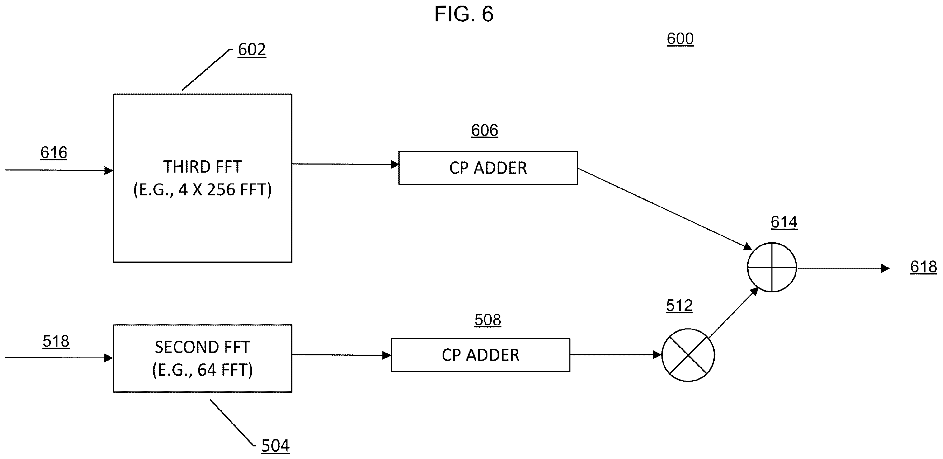

FIG. 6 illustrates another system 600 to generate the time domain waveforms shown in FIG. 4. The another system 600 may use a third FFT engine 602 (e.g., a normal 4 x 256 FFT engine) with the P20 channel inputs that are set to zero.

In FIG. 6, a third input 616 to the third FFT engine 602 is symbols carrying data for the HE user (HE STA) and the second input 518 to the second FFT engine 504 is the symbols carrying data for the non-HE user (non-HE STA). Also, an output 618 of the another system 600 (an output of the combiner 614) is a combined signal from the above-described two paths.

The normal 4x256 FFT engine 602 is essentially the same FFT as required by an 80 MHz HE PPDU. The output of the normal 4x256 FFT engine 602 would fall at the correct positions in the frequency band, and hence, there would be no need for a mixing operation (as performed by the first mixer 510 of FIG. 5) after the CP addition (as performed by the first CP adder 506). That is, an output of a CP adder 606 is directly transmitted to the combiner 614. The 1x64 FFT engine 504 would remain as shown in FIG. 5, including the second CP adder 508 and the second mixer 512.

The embodiment shown in FIG. 4 has the 80 MHz (20 MHz X 4) channel bandwidth as an example. In other embodiments of the disclosure, channel bandwidths can be extended to any other channel bandwidths, such as bandwidths wider than 20 MHz channel bandwidth. In those embodiments, more than 20 MHz channel bandwidths may be allocated for the non-HE waveform.

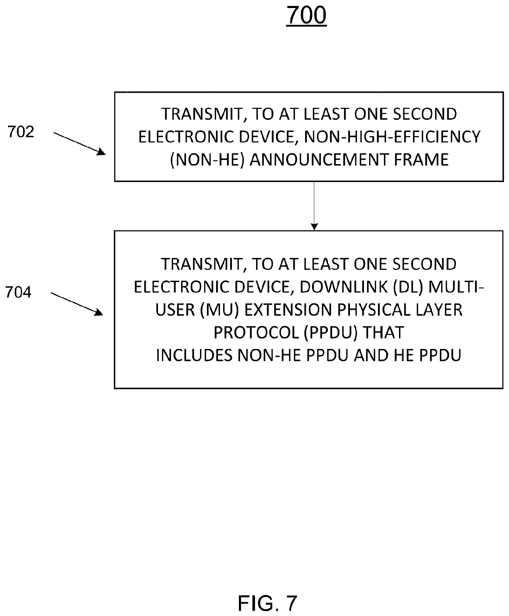

FIG. 7 illustrates operations of a method 700 performed by a first electronic device (for example, the access point 202) in accordance with embodiments of the disclosure.

In operation 702, the first electronic device transmits, to at least one second electronic device (for example, the station 204), a non-HE announcement frame.

In operation 704, the first electronic device transmits, to the at least one second electronic device, a DL MU extension PPDU that includes: a non-HE PPDU and a HE PPDU.

In an embodiment, the first electronic device includes a first transceiver, a first memory storing at least one instruction, and a first processor operatively connected to the first transceiver and the first memory. The first processor is configured to execute the at least one instruction to perform the above described operations 702 and 704.

In an embodiment, the first electronic device further includes the first FFT engine 502, the second FFT engine 504; the first CP adder 506, the second adder 508; the first mixer 510, the second mixer 512; the combiner 514.

The first electronic device utilizes the first FFT engine 502, the first CP adder 506, and the first mixer 510, to convert the symbols for carrying data for a HE user (HE STA) into the HE PPDU, as shown in FIG. 5 and described above.

Further, the first electronic device utilizes the second FFT engine 504, the second adder 508, the second mixer 512 to convert the symbols for carrying data for the non-HE user (non-HE STA) to the non-HE PPDU. Further, the first electronic device utilizes the combiner 514 to generate the DL MU PPDU by combining the non-HE PPDU and the HE PPDU.

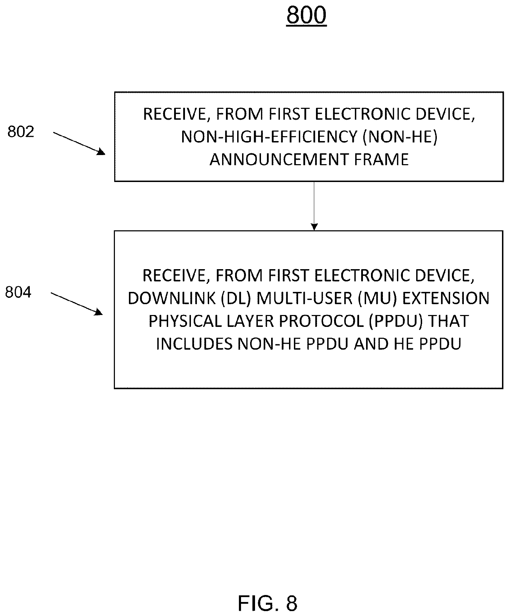

FIG. 8 illustrates operations of a method 800 performed by the second electronic device (for example, the station 204) in accordance with embodiments of the disclosure.

In operation 802, the second electronic device receives, from the first electronic device (for example, the access point 202), a non-HE announcement frame.

In operation 804, the second electronic device receives, from the first electronic device, a DL MU extension PPDU that includes: a non-HE PPDU and a HE PPDU.

In an embodiment, the second electronic device includes a second transceiver, a second memory storing at least one instruction, and a second processor operatively connected to the second transceiver and the second memory. The second processor is configured to execute the at least one instruction to perform the above described operations 802 and 804.

The disclosure is not limited to frequency multiplexing cases where non-HE type of data and HE type of data can be frequency multiplexed into one WiFi packet as depicted in FIG. 5 and FIG. 6 (having the P20 channel and the secondary channels). In some embodiments, the disclosure can be extended to spatial domain cases.

In some embodiments, the first mixer 510 and the second mixer 512 can be replaced with spatial mapping blocks. That is, in the spatial domain cases, both data are located in the same frequency but different spatial streams.

For example, an access point may have a big enough antenna array (the number of antenna elements are bigger than the number of devices the AP are serving), e.g., 8 antenna elements serving 4 associated devices. Out of these 4 devices, when there are three non-HE device (station) and 1 HE device, the access point will form one omni-directional spatial stream (beam) 1 with null towards the HE device (null instead of beaming); the spatial stream 1 is intended for the 3 NON-HE device; and form another directional spatial stream (beam) 2 towards the HE device. This example assumes that the access point using sounding procedure to know the angle information for the HE device and assume no knowledge of the NON-HE device. However, based on the transmission from the NON-HE devices and channel reciprocity, the access point can well be informed about the NON-HE devices direction and form directional beams targeting multiple NON-HE devices (instead of omni-directional beam with null).

In some embodiments, the spatial multiplexing (with null or not) may depend on the spatial location of those devices.

The disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. A singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., via wires), wirelessly, or via a third element.

As used in connection with the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

One or more embodiments as set forth herein may be implemented as software including one or more instructions that are stored in a storage medium that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to one or more embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to one or more embodiments, each component (e.g., a module or a program) of the above-described components may include a single entity or multiple entities. According to one or more embodiments, one or more of the above-described components may be omitted, or one or more other components may be added. Alternatively or additionally, a plurality of components (e.g., modules or programs) may be integrated into a single component. In such a case, according to one or more embodiments, the integrated component may still perform one or more functions of each of the plurality of components in the same or similar manner as they are performed by a corresponding one of the plurality of components before the integration. According to one or more embodiments, operations performed by the module, the program, or another component may be carried out sequentially, in parallel, repeatedly, or heuristically, or one or more of the operations may be executed in a different order or omitted, or one or more other operations may be added.

According to one or more embodiments, in a non-volatile storage medium storing instructions, the instructions may be configured to, when executed by at least one processor, cause the at least one processor to perform at least one operation. The at least one operation may include displaying an application screen of a running application on a display, identifying a data input field included in the application screen, identifying a data type corresponding to the data input field, displaying at least one external electronic device, around the electronic device, capable of providing data corresponding to the identified data type, receiving data corresponding to the identified data type from an external electronic device selected from among the at least one external electronic device through a communication module, and entering the received data into the data input field.

The embodiments of the disclosure described in the present specification and the drawings are only presented as specific examples to easily explain the technical content according to the embodiments of the disclosure and help understanding of the embodiments of the disclosure, not intended to limit the scope of the invention as defined in the appended claims.

## Claims

1. A first electronic device (202) comprising:
a first transceiver (206);
a first memory (210) storing at least one instruction; and
a first processor (208) operatively connected to the first transceiver (206) and the first memory (210), the first processor (208) being configured to execute the at least one instruction to:
transmit (702), to at least one second electronic device (204), a non-high-efficiency, non-HE, announcement frame, and
transmit (704), to the at least one second electronic device (204), a downlink, DL, multi-user, MU,) extension, Ext, physical layer protocol, PPDU, wherein the DL MU Ext PPDU includes: a non-HE PPDU and a HE PPDU.

2. The first electronic device (202) of claim 1, wherein the first processor (208) is further configured to execute the at least one instruction to transmit the DL MU Ext PPDU at a first time instance after transmitting the non-HE announcement frame at a second time instance, and
wherein a time difference between the first time instance and the second time instance is a short inter frame space, SIFS.

3. The first electronic device (202) of claim 1 or 2, further comprising a first fast Fourier transform, FFT, engine (502), a first cyclic prefix, CP, adder (506), and a first mixer (510),
wherein the first processor (208) is further configured to execute the at least one instruction to convert symbols for carrying data for a HE station into the HE PPDU by utilizing the first FFT engine (502), the first CP adder (506), and the first mixer (510).

4. The first electronic device (202) of claim 3, further comprising a second FFT engine (518), a second CP adder (508), and a second mixer (512),
wherein the first processor (208) is further configured to execute the at least one instruction to convert symbols for carrying data for a non-HE station into the non-HE PPDU by utilizing the second FFT engine (502), the second CP adder (508), and the second mixer (510).

5. The first electronic device (202) of claim 4, further comprising a combiner (514) configured to combine the HE PPDU with the non-HE PPDU,
wherein the first processor(208) is further configured to execute the at least one instruction to generate the DL MU Ext PPDU by using the combiner (514).

6. The first electronic device (202) of any one of claims 1 to 5, wherein the first electronic device (202) is an access point in a wireless communication system (200).

7. The first electronic device (202) of claim 6, wherein the wireless communication system (200) is an IEEE 802.11 system.

8. The first electronic device (202) of claim 7, wherein the DL MU Ext PPDU includes a primary channel (360) containing the non-HE PPDU (304) and a secondary channel (370, 380) containing the HE PPDU.

9. The first electronic device (202) of any one of claims 1 to 8, wherein the first processor (208) is further configured to execute the at least one instruction to:
transmit, to the at least one second electronic device (204), a non-extremely high throughput, non-EHT, announcement frame, and
transmit, to the at least one second electronic device (204), another DL MU Ext physical layer protocol, PPDU,
wherein the another DL MU Ext PPDU includes: a non-EHT PPDU and an EHT PPDU.

10. The first electronic device (202) of any one of claims 1 to 8, wherein the first processor (208) is further configured to execute the at least one instruction to:
transmit, to the at least one second electronic device (204), a non-ultra-high reliability (non-UHR) announcement frame, and
transmit, to the at least one second electronic device (204), another DL MU Ext physical layer protocol (PPDU),
wherein the another DL MU Ext PPDU includes: a non-UHR PPDU and a UHR PPDU.

11. A second electronic device (204) comprising:
a second transceiver (212);
a second memory (216) storing at least one instruction; and
a second processor (214) operatively connected to the second transceiver (212) and the second memory (216), the second processor (214) being configured to execute the at least one instruction to:
receive, from a first electronic device (202), a non-high-efficiency, non-HE, announcement frame, and
receive, from the first electronic device (202), a downlink, DL, multi-user, MU, extension, Ext, physical layer protocol, PPDU,
wherein the DL MU Ext PPDU includes: a non-HE PPDU and a HE PPDU.

12. The second electronic device (204) of claim 11, wherein the second electronic device (204) is a station in a wireless communication system (200).

13. The second electronic device (204) of claim 12, wherein the wireless communication system (200) is an IEEE 802.11 system.

14. The second electronic device (204) of claim 13, wherein the DL MU Ext PPDU includes a primary channel (360) containing the non-HE PPDU (304) and a secondary channel (370, 380) containing the HE PPDU.

15. A method performed by a first electronic device (202), the method comprising:
transmitting, to at least one second electronic device (204), a non-high-efficiency, non-HE, announcement frame; and
transmitting, to the at least one second electronic device (204), a downlink, DL, multi-user, MU, extension, Ext, physical layer protocol, PPDU, wherein the DL MU Ext PPDU includes: a non-HE PPDU and a HE PPDU.
